# EUROPEAN PATENT APPLICATION

(11) **EP 4 503 310 A1**
(43) Date of publication of application: **05.02.2025**
(21) Application number: 23787504.2
(22) Date of filing: 28.03.2023
(51) Int. Cl.: H01M 50/471, H01M 50/242

(54) **BATTERY CELL, BATTERY, AND POWER CONSUMING DEVICE**

(30) Priority: 12.04.2022 CN 202210379965
(71) Applicant: Contemporary Amperex Technology (Hong Kong) Limited, Central, Central And Western District (HK)
(72) Inventor: ZHANG, Tao, Ningde, Fujian 352100 (CN); HE, Jianfu, Ningde, Fujian 352100 (CN); LIU, Qian, Ningde, Fujian 352100 (CN); CUI, Chen, Ningde, Fujian 352100 (CN); SUN, Xueyang, Ningde, Fujian 352100 (CN); YE, Yonghuang, Ningde, Fujian 352100 (CN)
(74) Representative: Gong, Jinping
(86) International application number: PCT/CN2023/084267
(87) International publication number: WO 2023/197858

(57) **Abstract**

The present application discloses a battery cell, a battery, and an electrical device. The battery cell includes a shell, an electrode assembly and a buffering member. The shell includes two first side walls arranged opposite to each other in a first direction, with a spacing of D1 between the two first side walls in the first direction. The electrode assembly is accommodated inside the shell. M electrode assemblies are provided, where M is a positive integer greater than 0. In the fully charged state, the sum of the dimensions of M electrode assemblies along the first direction is D2. The buffering member is accommodated inside the shell. N buffering members are provided, where N is a positive integer greater than 0. N buffering members and M electrode assemblies are stacked in the first direction. The buffering member is configured to be compressible, and the sum of the dimensions of N buffering members along the first direction in an uncompressed state is D3. D1, D2, and D3 meet: 0.9≤(D2+D3)/D1≤1.5. The embodiments of the present application can improve the cycling performance of the battery cell and reduce the growth of the expansion force.

## Description

### CROSS-REFERENCE OF RELATED APPLICATOINS

The present application claims the priority of the Chinese patent application No. 202210379965.0 entitled "Battery Cell, Battery and Electrical Device" submitted on April 12, 2022, which is incorporated herein in its entirety by reference.

### TECHNICAL FIELD

The present application relates to the field of batteries, and in particular to a battery cell, a battery, and an electrical device.

### BACKGROUND

Battery cells are widely used in electronic devices, such as mobile phones, laptops, electric cars, electric vehicles, electric airplanes, electric ships, electric toy cars, electric toy ships, electric toy planes and electric tools. Battery cells can include cadmium nickel battery cells, hydrogen nickel battery cells, lithium-ion battery cells, and secondary alkaline zinc manganese battery cells, etc.

In the development of the battery technology, how to improve the cycling performance of a battery cell is an important research direction in battery technology.

### SUMMARY

The present application provides a battery cell, a method and system for manufacturing the battery cell, a battery, and an electrical device that can improve the cycling performance of the battery cell.

In a first aspect, the present application provides a battery cell including a shell, an electrode assembly, and a buffering member. The shell includes two first side walls arranged opposite to each other in the first direction, with a spacing of D1 between the two first side walls in the first direction. The electrode assembly is accommodated inside the shell. M electrode assemblies are provided, where M is a positive integer greater than 0. In a fully charged state, the sum of the dimensions of M electrode assemblies along the first direction is D2. The buffering member is accommodated inside the shell. N buffering member are provided, where N is a positive integer greater than 0. N buffering members and M electrode assemblies are stacked in the first direction. The buffering member is configured to be compressible, and the sum of the dimensions of N buffering members along the first direction in an uncompressed state is D3. D1, D2, and D3 meet: 0.9≤(D2+D3)/D1≤1.5.

In the above-mentioned technical solution, the buffering member can to some extent limit the deformation of the electrode assembly during the initial charging of the battery cell, improve the uniformity of the force distribution of the electrode assembly, reduce the risk of wrinkling of the electrode plate of the electrode assembly, and extend the service life of the electrode assembly. During the cycling of the battery cell, the buffering member is compressed when squeezed by the electrode assembly, so as to provide space for the expansion of the electrode assembly, thereby reducing the action force between the shell and the electrode assembly, and improving the cycling performance of the electrode assembly. The above technical solution limits the value of (D2+D3)/D1 to 0.9-1.5, which can reduce the risk of wrinkling of the electrode plate, save the usage amount of the buffering member, improve the energy density of the battery cell, reduce the expansion force of the electrode assembly, and improve the cycling performance of the electrode assembly.

In some embodiments, D1, D2, and D3 satisfy: 0.98≤(D2+D3)/D1≤1.25.

In some embodiments, the first direction is parallel to the thickness direction of the battery cell.

In some embodiments, D2 and D3 satisfy: D3≤0.25•D2. The above technical solution can reduce the usage amount of the buffering member, improve the energy density of the battery cell, and improve the cycling performance of the electrode assembly.

In some embodiments, the electrode assembly includes a first electrode plate. The first electrode plate includes a first body and a first electrode tab led out from an end of the first body in a second direction perpendicular to the first direction. The dimension of the buffering member along the second direction is H1. The first body is provided with a first active substance layer, and the dimension of the first active substance layer along the second direction is H2. H1 and H2 meet: H1≥ 0.85•H2.

The main reason for the expansion of the electrode assembly is the expansion of the active substance layer during the charging. The above technical solution limits the value of H1 to be greater than or equal to 0.85•H2, so that the expansion of the first active substance layer in the second direction in more than 85% of the area can be absorbed by the buffering member, reducing the pressure on the first active substance layer and improving the cycling performance of the electrode assembly.

In some embodiments, the first active substance layer includes a substrate area and a thinning area connected to the substrate area, and a thickness of the thinning area is smaller than that of the substrate area. In the second direction, the thinning area is located on the side of the substrate area near the first electrode tab. In the second direction, two ends of the buffering member exceed the substrate area.

Compared to the thinning area, the substrate area, when expands, generates a greater expansion force. Therefore, the above technical solution allows the two ends of the buffering member along the second direction to extend beyond the substrate area, thereby effectively absorbing the expansion of the substrate area and improving the cycling performance of the electrode assembly.

In some embodiments, the electrode assembly further includes an isolation member arranged to be stacked with the first body. The dimension of the isolation member along the second direction is H3. H1 and H3 meet: H1 ≤ 1.1•H3. In the second direction, the part of the buffering member that exceeds the isolation member will not absorb the expansion of the electrode assembly, but will instead increase the volume and the weight of the buffering member. The above technical solution reduces the usage amount of the buffering member and improves the energy density of the battery cell by the value of H1 less than or equal to 1.1•H3.

In some embodiments, in the second direction, two ends of the buffering member do not exceed the isolation element to reduce the usage amount of the buffering member, reduce the risk of interference between the buffering member and other members, and improve the energy density of the battery cell.

In some embodiments, the electrode assembly includes a straight area and two bent areas. The two bent areas are located on two sides of the straight area along a third direction perpendicular to the first direction respectively. The dimension of the buffering member in the third direction is L1, the dimension of the electrode assembly in the third direction in fully charged state is L2, and the dimension of one electrode assembly in the first direction in fully charged state is D4. L1, L2, and D4 meet: L1≥ 0.85 (L2-D4).

Due to the large gap between the bent area of the electrode assembly and the first side wall, the expansion force generated by the bent area is small. The gap between the straight area of the electrode assembly and the first side wall is small, so the expansion force generated by the straight area is large. The above technical solution limits the value of L1 to be greater than or equal to 0.85 (L2-D4), so that the expansion of more than 85% of area of the straight area in the third direction can be absorbed by the buffering member to ensure the cyclic performance of the straight area.

In some embodiments, in the third direction, the two ends of the buffering member exceed the straight area. The buffering member can effectively absorb the expansion of the straight area and improve the cycling performance of the straight area.

In some embodiments, L1 and L2 satisfy: L1 ≤ 1.1•L2. In the third direction, the portion of the buffering member that exceeds the electrode assembly will not absorb the expansion of the electrode assembly, but will instead increase the volume and the weight of the buffering member. The present embodiment reduces the usage amount of the buffering member and improves the energy density of the battery cell by the value of L1 less than or equal to 1.1•L2.

In some embodiments, the area of the projection of the buffering member along the first direction on the inner surface of the first side wall is S1, and the area of the inner surface of the first sidewall is S2. S1 and S2 satisfy: S1≤0.95•S2.

The above technical solution can reduce the overall usage amount of the buffering member, provide more space for other members inside the shell, and improve the energy density and service life of the battery cell.

In some embodiments, the dimension of each buffering member along the first direction in an uncompressed state is D5, and D5 satisfies: 0.1mm≤D5≤10mm.

In some embodiments, the compression rate f of the buffering member under a pressure of 2Mpa satisfies: 1%≤f≤99%.

In some embodiments, the buffering member is attached to the electrode assembly. The buffering member attached to the electrode assembly can be installed together with the electrode assembly into the shell to simplify the assembly process. The electrode assembly can further limit the shaking of the buffering member when the battery cell is subjected to external impacts, in order to reduce the risk of the offset of the buffering member.

In some embodiments, the battery cell includes a plurality of electrode assemblies. At least two adjacent electrode assemblies are provided with a buffering member. The buffering member provided between adjacent electrode assemblies can reduce the risk of the shaking of the buffering member when the battery cell is subjected to external impacts.

In some embodiments, the buffering member is a flat plate structure. The flat structure is easy to form and can improve the uniformity of force distribution on the electrode assembly when the electrode assembly expands.

In a second aspect, embodiments of the present application provide a battery including a plurality of battery cells of any one embodiment in the first aspect.

In a third aspect, embodiments of the present application provide an electrical device including a battery cell of any embodiment in the first aspect, for providing electrical energy.

In a fourth aspect, embodiments of the present application provide a method for manufacturing a battery cell, including: providing a shell including two first side walls arranged opposite to each other in a first direction; providing an electrode assembly and a buffering member; and installing the electrode assembly and the buffering member into the shell. The spacing between the two first side walls along the first direction is D1. M electrode assemblies are provided, where M is a positive integer greater than 0; in the fully charged state, the sum of the dimensions of M electrode assemblies along the first direction is D2. N buffering members are provided, where N is a positive integer greater than 0. N buffering members and M electrode assemblies are stacked in the first direction. The buffering member is configured to be compressible, and the sum of the dimensions of N buffering members along the first direction in an uncompressed state is D3. D1, D2, and D3 meet: 0.9≤(D2+D3)/D1≤1.5.

In a fifth aspect, embodiments of the present application provide a system for manufacturing a battery cell, including a first providing device, a second providing device, and an assembly device. The first providing device is configured to provide a shell including two first side walls arranged opposite to each other in the first direction. The second providing device is configured to provide an electrode assembly and a buffering member. The assembly device is configured to install the electrode assembly and the buffering member into the shell. The spacing between the two first side walls along the first direction is D1. M electrode assemblies are provided, where M is a positive integer greater than 0. In the fully charged state, the sum of the dimensions of M electrode assemblies along the first direction is D2. N buffering members are provided, where N is a positive integer greater than 0. N buffering members and M electrode assemblies are stacked in the first direction. The buffering member is configured to be compressible, and the sum of the dimensions of N buffering members along the first direction in an uncompressed state is D3. D1, D2, and D3 meet: 0.9≤(D2+D3)/D1≤1.5.

### BRIEF DESCRIPTION OF THE DRAWINGS

The following will refer to the accompanying drawings to describe the features, advantages, and technical effects of exemplary embodiments of the present application.
Fig. 1 is a structural schematic diagram of a vehicle provided in some embodiments of the present application;
Fig. 2 is an exploded schematic diagram of a battery provided in some embodiments of the present application;
Fig. 3 is an exploded schematic diagram of the battery module shown in Fig 2;
Fig. 4 is an exploded schematic diagram of a battery cell provided in some embodiments of the present application;
Fig 5 is a structural schematic diagram of a battery cell provided in some embodiments of the present application;
Fig. 6 is a sectional schematic diagram of an electrode assembly of a battery cell provided in some embodiments of the present application;
Fig. 7 is a sectional schematic diagram of a battery cell provided in some embodiments of the present application;
Fig. 8 is a partial sectional schematic diagram of an electrode assembly and a buffering member of a battery cell provided in some embodiments of the present application;
Fig. 9 is a structural schematic diagram of a battery cell provided in some other embodiments of the present application;
Fig. 10 is a structural schematic diagram of a battery cell provided in some further other embodiments of the present application;
Fig. 11 is a structural schematic diagram of a battery cell provided in some still other embodiments of the present application;
Fig. 12 is a flowchart illustrating the method for manufacturing a battery cell provided in some embodiments of the present application;
Fig 13 is a schematic block diagram of a system for manufacturing a battery cell provided in some embodiments of the present application;
Fig. 14 is a structural schematic diagram of a battery cell provided in some embodiments of the present application.

The references signs of specific embodiments are as follows:
1. Vehicle; 2. Battery; 3. Controller; 4. Motor; 5. Case; 5a. First case part; 5b, Second case part; 5c. Accommodation space; 6. Battery module; 7. Battery cell;
10. Electrode assembly; 11. First electrode plate; 111. First body; 112. First active substance layer; 112a, Substrate area; 112b, Thinning area; 12. Second electrode plate; 13. Isolation member; 14. Main body portion; 15. First electrode tab; 16. Second electrode tab; 10a, Straight area; 10b, Bent area;
20. Shell; 21. Shell body; 211. First side wall; 212. Second sidewall; 22. End cover;
30. Buffering member; 40. Electrode terminal;
90. System for manufacturing; 91. First providing device; 92. Second providing device; 93. Assembly device;
X. First direction; Y. Second direction; Z. Third direction.

### DETAILED DESCRIPTION

In order to make the purpose, the technical solutions, and the advantages of the embodiments of the present application clearer, the following will provide a clear and complete description for the technical solutions in the embodiments of the present application in conjunction with the accompanying drawings. Obviously, the described embodiments are a part of the embodiments of the present application, but not all the embodiments. Based on the embodiments of the present application, all the other embodiments obtained by the skilled person in the art without creative effort fall within the scope of the protection of the present application.

Unless otherwise defined, all technical and scientific terms used in the text have the same meanings as those commonly understood by the skilled person in the technical field which the present application belongs to. The terms used in the specification of the application in the text are only for the purpose of describing specific embodiments and are not intended to limit the present application. The terms "including" and "having" in the description, the claims, the description of the above accompanying drawings of the present application, and any variations thereof, are intended to cover non-exclusive inclusion. The terms "first", "second", etc. in the description, the claims, or the above accompanying drawings of the present application are for distinguishing different objects, rather than to describe the specific order or the primary and secondary relationship.

Referring to "embodiment" in the text means that specific features, structures, or characteristics described in conjunction with the embodiments may be included in at least one embodiment of the present application. The phrase appearing in various positions in the specification does not necessarily refer to the same embodiment, nor is it an independent or alternative embodiment that is mutually exclusive with other embodiments.

In the description of the present application, it should be noted that unless otherwise specified and limited, the terms "installation", "connected with", "connection", "attachment" should be broadly understood. For example, the "connection" may be fixed connection, detachable connection, integrated connection, direct connection, indirect connection via an intermediate medium, or internal communication between two elements. The skilled person in the art may appreciate the specific meanings of the foregoing terms in the present application according to specific circumstances.

In the text, the term "and/or" is only a description of the association relationship of the associated object, indicating that there can be three types of relationships, such as A and/or B which can indicate the presence of A alone, the presence of A and B simultaneously, and the presence of B alone. In addition, the character "/" in the text generally indicates that the objects associated before and after are an "or" relationship.

In the embodiments of the present application, the same reference signs represent the same component, and for simplicity, detailed explanations of the same component are omitted in different embodiments. It should be understood that the thickness, length, width, and other dimensions of various components, as well as the overall thickness, length, width, and other dimensions of the integrated device in the embodiments of the present application shown in the accompanying drawings are only illustrative and should not constitute any limitation on the present application.

The terms "multiple", "a plurality of" appearing in the present application refer to two or more (including two).

In the present application, battery cells may include lithium-ion secondary battery cells, lithium-ion primary battery cells, lithium-sulfur battery cells, sodium lithium ion battery cells, sodium ion battery cells, or magnesium ion battery cells, etc., which are not limited by the embodiments of the present application. The battery cells can be cylindrical, flat, cuboid, or other shapes, which are not limited by the embodiments of the present application.

The battery referred to in the embodiments of the present application refers to a single physical module including one or more battery cells to provide higher voltage and capacity. For example, the battery mentioned in the present application may include a battery module or a battery pack, etc. A battery generally includes a case for encapsulating one or more battery cells. The case can prevent liquids or other foreign objects from affecting the charging or discharging of the battery cell.

The battery cell includes an electrode assembly and an electrolytic solution, and the electrode assembly includes a positive electrode plate, a negative electrode plate, and an isolation member. The battery cell mainly relies on the movement of metal ions between the positive electrode plate and the negative electrode plate for operation. The positive electrode plate includes a positive electrode current collector and a positive electrode active substance layer. The positive electrode active substance layer is applied on the surface of the positive electrode current collector. The positive electrode current collector includes a positive electrode coated area and a positive electrode tab connected to the positive electrode coated area. The positive electrode coated area is applied with the positive electrode active substance layer and the positive electrode tab is not applied with the positive electrode active substance layer. Taking the lithium-ion battery as an example, the material of the positive electrode current collector can be aluminum, and the positive electrode active substance can be lithium cobalt oxide, lithium iron phosphate, ternary lithium, or lithium manganese oxide. The negative electrode plate includes a negative electrode current collector and a negative electrode active substance layer. The negative electrode active substance layer is applied on the surface of the negative electrode current collector. The negative electrode current collector includes a negative electrode coated area and a negative electrode tab connected to the negative electrode coated area. The negative electrode coated area is applied with the negative electrode active substance layer and the negative electrode tab is not applied with the negative electrode active substance layer. The material of the negative electrode current collector can be copper. The negative electrode active substance layer includes a negative electrode active substance. The negative electrode active substance can be carbon or silicon, etc. The material of the isolation member can be PP (polypropylene) or PE (polyethylene), etc.

The battery cell further includes a shell, and an accommodation chamber for accommodating the electrode assembly is formed inside the shell. The shell can protect the electrode assembly from the outside to prevent external foreign objects from affecting the charging or discharging of the electrode assembly.

During the charging, the electrode assembly may experience expansion. The expanding electrode assembly will press the shell, and correspondingly, the shell will apply a reaction force to the electrode assembly to limit the expansion of the electrode assembly. If the action force between the electrode assembly and the shell is too large, the electrolytic solution between the electrode plates may be squeezed out, affecting the cycling performance of the electrode assembly.

The inventor attempted to provide a gap between the electrode assembly and the shell, which could reserve space for the expansion of the electrode assembly, thereby reducing the action force between the shell and the electrode assembly and improving the cycling performance of the electrode assembly. However, the inventors found that during the initial charging of the electrode assembly, due to the presence of the gap, the electrode assembly is not constrained by the shell or is less constrained by the shell, resulting in poor force uniformity of the electrode assembly and the risk of wrinkling of the electrode plate. If wrinkles appears in the electrode plate, metal ions may precipitate during the subsequent cycling, reducing the cycling life of the electrode assembly and even causing the failure of the electrode assembly.

In view of this, the inventor provided a buffering member inside the shell, which can to some extent limit the deformation of the electrode assembly during the initial charging of the battery cell, improve the uniformity of force distribution of the electrode assembly, reduce the risk of wrinkling of the electrode plate of the electrode assembly, and extend the service life of the electrode assembly. During the cycling of the battery cell, the buffering member is compressed when squeezed by the electrode assembly, so as to provide space for the expansion of the electrode assembly, thereby reducing the action force between the shell and the electrode assembly, and improving the cycling performance of the electrode assembly. The inventor, through calculation and experimentation, set the dimension of the buffering member according to the dimension of the electrode assembly and the dimension of the shell to improve the cycling performance of the electrode assembly.

The battery cell described in the embodiments of the present application is applicable to a battery and an electrical device using the battery cell.

Electrical devices can be vehicles, mobile phones, portable devices, laptops, ships, spacecraft, electric toys, and electric tools, etc. The vehicle can be a fuel powered vehicle, a gas powered vehicle, or a new energy vehicle. The new energy vehicle can be a pure electric vehicle, a hybrid electric vehicle, or an extended range vehicle, etc. Spacecraft include airplanes, rockets, space shuttles, and spaceship, etc. Electric toys include fixed or mobile electric toys, such as game consoles, electric car toys, electric boat toys, and electric airplane toys. Electric tools include metal cutting electric tools, grinding electric tools, assembly electric tools, and railway electric tools, such as electric drills, electric grinders, electric wrenches, electric screwdrivers, electric hammers, impact drills, concrete vibrators, and electric planers. The embodiments of the present application do not impose special restrictions on the above-mentioned electrical devices.

For the convenience of explanation, the following embodiments will take the electrical device being a vehicle as an example.

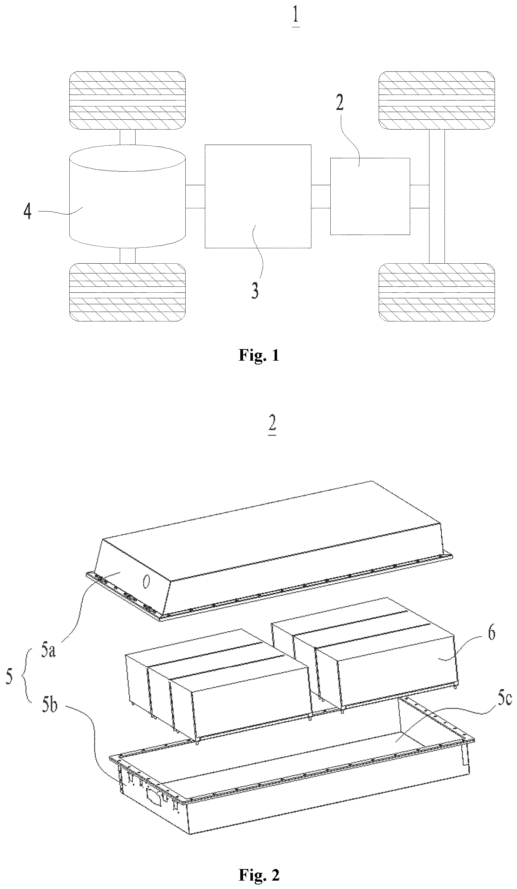

Fig. 1 is a structural schematic diagram of a vehicle provided in some embodiments of the present application.

As shown in Fig. 1, the interior of the vehicle 1 is provided with a battery 2, which can be installed at the bottom, head, or tail of the vehicle 1. The battery 2 can be used for power supply to the vehicle 1. For example, the battery 2 can serve as the operating power source for the vehicle 1.

The vehicle 1 may further include a controller 3 and a motor 4. The controller 3 is configured to control the battery 2 to supply power to the motor 4, for example, to meet the operational power requirements for starting, navigation, and driving of the vehicle 1.

In some embodiments of the present application, the battery 2 can not only serve as the operating power source for the vehicle 1, but also as the driving power source for the vehicle 1, replacing or partially replacing fuel or natural gas to provide driving power for the vehicle 1.

Fig. 2 is an exploded schematic diagram of a battery provided in some embodiments of the present application.

As shown in Fig. 2, the battery 2 includes a case 5 and a battery cell (not shown), and the battery cell is accommodated inside the case 5.

The case 5 is configured to accommodate the battery cell and can be of various structures. In some embodiments, the case 5 may include a first case part 5a and a second case part 5b. The first case part 5a and the second case part 5b cover each other, and the first case part 5a and the second case part 5b jointly define an accommodation space 5c for accommodating the battery cell. The second case part 5b can be a hollow structure with one end opening, the first case part 5a is a plate-like structure, and the first case part 5a fits on the opening side of the second case part 5b to form a case 5 with an accommodation space 5c. The first case part 5a and the second case part 5b can also be a hollow structure with one side opening. The opening side of the first case part 5a fits on the opening side of the second case part 5b to form a case 5 with an accommodation space 5c. Of course, the first case part 5a and the second case part 5b can have various shapes, such as cylinder and cuboid.

In order to improve the sealing performance of the first case part 5a and the second case part 5b after being connected, a sealing element such as a sealant and a sealing ring can further be installed between the first case part 5a and the second case part 5b.

Assuming that the first case part 5a fits on the top of the second case part 5b, the first case part 5a can also be referred to as the upper case cover, and the second case part 5b can also be referred to as the lower case.

In the battery 2, there can be one or a plurality of battery cells. If a plurality of battery cells are provided, the plurality of battery cells can be connected in series, parallel, or hybrid. Hybrid connection refers to the presence of both series and parallel connections among the plurality of battery cells. The plurality of battery cells can be directly connected in series, parallel, or hybrid together, and then the whole composed of the plurality of battery cells can be accommodated in the case 5. Of course, the plurality of battery cells can also be connected in series, parallel, or hybrid to form a battery module 6. A plurality of battery modules 6 can then be connected in series, parallel, or hybrid to form a whole and accommodated in the case 5.

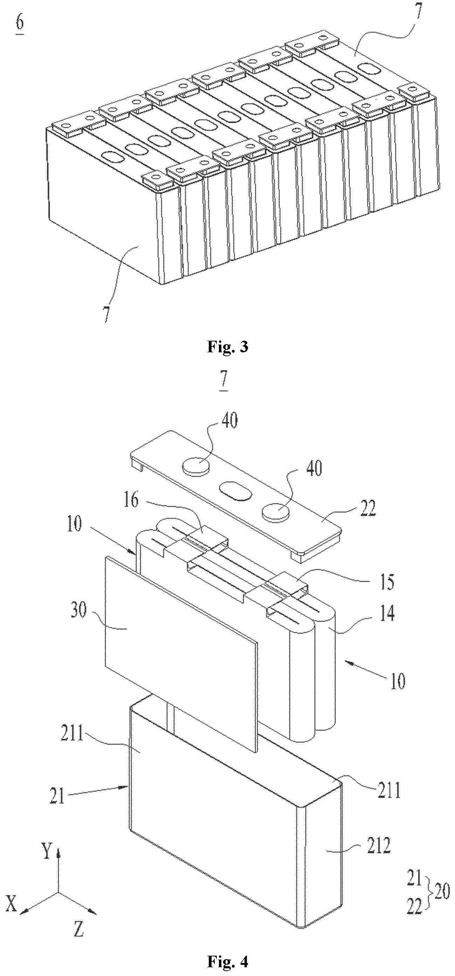

Fig. 3 is an exploded schematic diagram of the battery module shown in Fig. 2.

In some embodiments, as shown in Fig. 3, a plurality of battery cells 7 are provided, and the plurality of battery cells 7 are first connected in series, parallel, or hybrid to form a battery module 6. A plurality of battery modules 6 are connected in series, parallel, or hybrid to form a whole and accommodated inside the case.

The plurality of battery cells 7 in the battery module 6 can be electrically connected through a busbar to achieve parallel, series, or hybrid connection of the plurality of battery cells 7 in the battery module 6.

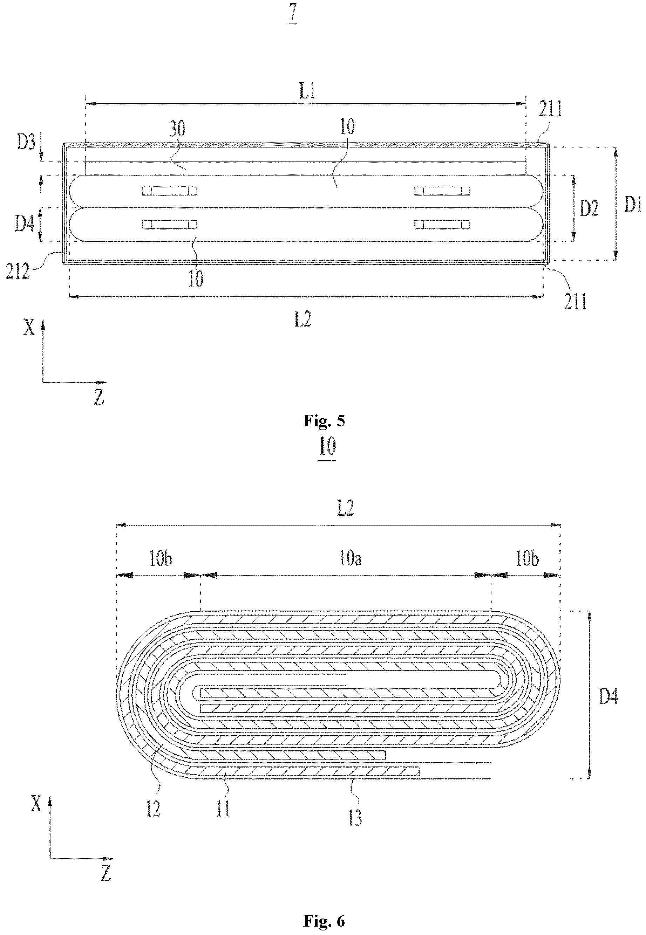

Fig. 4 is an exploded schematic diagram of a battery cell provided in some embodiments of the present application. Fig. 5 is a structural schematic diagram of a battery cell provided in some embodiments of the present application, with the end cover omitted. Fig. 6 is a sectional schematic diagram of an electrode assembly of a battery cell provided in some embodiments of the present application.

As shown in Figs. 4 to 6, the battery cell 7 of the embodiments of the present application includes a shell 20, an electrode assembly 10, and a buffering member 30. The shell 20 includes two first side walls 211 arranged opposite to each other along the first direction X, with a spacing of D1 between the two first side walls 211 along the first direction X. M electrode assemblies 10 are provided, and M electrode assemblies 10 are accommodated in the shell 20. In the fully charged state, the sum of the dimensions of M electrode assemblies 10 along the first direction X is D2, where M is a positive integer greater than 0. N buffering members 30 are provided, and N buffering members 30 are accommodated inside the shell 20 and stacked with M electrode assemblies 10 in the first direction X. The buffering member 30 is configured to be compressible, and the sum of the dimensions of N buffering members 30 along the first direction X in an uncompressed state is D3, with N being a positive integer greater than 0. D1, D2, and D3 meet: 0.9≤ (D2+D3)/D1≤1.5.

The shell 20 is a hollow structure, and an accommodation chamber is formed inside the shell 20 to accommodate the electrode assembly 10 and the electrolytic solution. The shell 20 can be in various shapes, such as a cuboid. The shape of the shell 20 can be determined based on the specific shape of the electrode assembly 10. For example, if the electrode assembly 10 is a cuboid structure, a cuboid shell can be selected.

The embodiments of the present application does not limit the material of the shell 20. For example, the shell 20 can be made of hard materials such as aluminum, steel, and plastic, or it can be made of aluminum-plastic film, steel plastic film, or other soft materials.

Two first side walls 211 are located on two sides of the accommodation chamber along the first direction X. For example, the dimension of the accommodation chamber along the first direction X is D1.

The value of D1 can be measured in various ways. For example, the value of D1 can be measured using a vernier caliper, or measured using microscopic markers such as mechanical cross-section/surface analysis.

The electrode assembly 10 includes a first electrode plate 11 and a second electrode plate 12. The electrode assembly 10 mainly relies on metal ions to move between the first electrode plate 11 and the second electrode plate 12 for operation. For example, the electrode assembly 10 further includes an isolation member 13 for insulating and isolating the first electrode piece 11 from the second electrode piece 12.

The polarity of the first electrode plate 11 is opposite to that of the second electrode plate 12. Specifically. One of the first electrode plates 11 and the second electrode plate 12 is the positive electrode plate, and the other is the negative electrode plate.

M is a positive integer greater than 0, which means that the electrode assembly 10 can be one or multiple. When a plurality of electrode assemblies 10 are provided, the plurality of electrode assemblies 10 can be stacked along the first direction X.

In a fully charged state, the electrode assembly 10 will experience expansion. For example, after the preparation of the battery cell 7, the battery cell 7 is charged at a rate of 0.33C at room temperature until it is fully charged. After the battery cell 7 is fully charged, the battery cell 7 is disassembled and the dimension D4 of each electrode assembly 10 along the first direction X in the fully charged state is measured using a vernier caliper.

When only one electrode assembly 10 is provided inside the battery cell 7, the value of D2 is equal to D4. When a plurality of electrode assemblies 10 are provided inside the battery cell 7, the value of D2 is equal to the sum of the dimensions D4 of the plurality of electrode assemblies 10 along the first direction X.

When a plurality of electrode assemblies 10 are provided, the dimension D4 of different electrode assemblies 10 along the first direction X can be the same or different.

N is a positive integer greater than 0, which means that buffering member 30 can be one or multiple.

N buffering members 30 and M electrode assemblies 10 are stacked in the first direction X. The embodiments of the present application do not limit the order in which the buffering member 30 and the electrode assembly 10 are stacked in the first direction X.

In some examples, one buffering member 30 and a plurality of electrode assemblies 10 are provided. The plurality of electrode assemblies 10 can be sequentially arranged along the first direction X to form an electrode unit, and the buffering member 30 can be arranged on a side of the electrode unit along the first direction X. Alternatively, the buffering member 30 can also be provided between adjacent electrode assemblies 10.

In some other examples, a plurality of buffering members 30 and one electrode assembly 10 are provided. The plurality of buffering members 30 can be sequentially arranged along the first direction X to form a buffering unit, and the electrode assembly 10 can be arranged on a side of the buffering unit along the first direction X. Alternatively, the electrode assembly 10 can be provided between adjacent buffering members 30.

In some still other examples, a plurality of buffering members 30 and a plurality of electrode assemblies 10 are provided. The order in which the plurality of buffering members 30 and the plurality of electrode assemblies 10 are stacked in the first direction X can be freely set according to requirements. For example, each buffering member 30 can be adjacent to the electrode assembly 10 or to another buffering member 30.

The buffering member 30 can be compressed when subjected to compression by the electrode assembly 10, providing space for the expansion of the electrode assembly 10 and reducing the action force between the first side wall 211 and the electrode assembly 10.

For example, the buffering member 30 has a certain elastic deformation ability. When the electrode assembly 10 is fully charged, the buffering member 30 can be compressed by the electrode assembly 10. When the electrode assembly 10 is fully discharged, the buffering member 30 can recover at least part of the deformation to ensure that the buffering member 30 can abut against the electrode assembly 10, thereby improving the uniformity of force distribution of the electrode assembly 10, and reducing the risk of wrinkling of the electrode plate of the electrode assembly 10.

The embodiments of the present application do not limit the specific material of the buffering member 30, which needs to have a certain ability to generate deformation and be able to recover at least part of the deformation when the external force is removed. For example, when it is necessary to measure the dimensions of each buffering member 30 in the first direction X in an uncompressed state, the battery cell 7 can be disassembled and the buffering member 30 can be taken out, and then the dimension D5 of each buffering member 30 in the first direction X in an uncompressed state can be measured using a vernier caliper. Alternatively, during the preparation process of the battery cell 7, the dimension D5 of the buffering member 30 along the first direction X in an uncompressed state can be measured before the buffering member 30 enters the shell.

When only one buffering member 30 is provided inside the battery cell 7, the value of D3 is equal to the value of D5. When a plurality of buffering members 30 are provided inside the battery cell 7, the value of D3 is equal to the sum of the dimensions D5 of the plurality of buffering members 30 along the first direction X.

When a plurality of buffering members 30 are provided, different buffering members 30 can have the same or different dimensions D5 along the first direction X in an uncompressed state.

The embodiments of the present application do not limit the shape of the buffering member 30, which can be the shape of a plate, a block, or other irregular shape.

The buffering member 30 can limit the deformation of the electrode assembly 10 to a certain extent during the initial charging of the battery cell 7, thereby improving the uniformity of force distribution of the electrode assembly 10, reducing the risk of wrinkling of the electrode plate of the electrode assembly 10, and extending the service life of the electrode assembly 10. During the cycling process of the battery cell 7, the buffering member 30 is compressed when received the squeezing of the electrode assembly 10 to provide space for the expansion of the electrode assembly 10, reduce the action force between the shell 20 and the electrode assembly 10, and improve the cycling performance of the electrode assembly 10.

If the value of (D2+D3)/D1 is smaller, then the utilization rate of the internal space of the shell 20 is lower, the electrode assembly 10 is less constrained by the first side wall 211 during the charging, and the risk of wrinkling of the electrode plate of the electrode assembly 10 is higher. Although the buffering member 30 can to some extent limit the deformation of the electrode assembly 10 during the initial charging of the battery cell 7, if the value of (D2+D3)/D1 is too small, the buffering member 30 may find it difficult to effectively limit the wrinkling of the electrode plate. In view of this, the inventor made (D2+D3)/D1 greater than or equal to 0.9 to improve space utilization and effectively reduce the risk of the wrinkling of the electrode plate.

The larger the value of (D2+D3)/D1 is, the better the buffering member 30 can limit the deformation of the electrode assembly 10 during the initial charging of the battery cell 7. Of course, if the value of (D2+D3)/D1 is larger, then the buffering member 30 occupies more space and has larger weight, and the compression amount of the buffering member 30 during the cycling of the battery cell 7 is larger. If the value of (D2+D3)/D1 is too large, it may cause the compressible amount of the buffering member 30 to be too small after entering the shell, resulting in insufficient expansion amount that the buffering member 30 can absorb and excessive expansion force of the electrode assembly 10. In view of this, the inventor made (D2+D3)/D1 less than or equal to 1.5 to save the usage amount of the buffering member 30, increase the energy density of the battery cell 7, reduce the expansion force of the electrode assembly 10, and improve the cycling performance of the electrode assembly 10.

Optionally, the value of (D2+D3)/D1 can be 0.9, 0.95, 0.98, 1, 1.1, 1.2, 1.25, 1.3, 1.4, or 1.5.

In some embodiments, D1, D2, and D3 satisfy: 0.98≤(D2+D3)/D1≤1.25.

In some embodiments, the electrode assembly 10 includes a main body portion 14 and a first electrode tab 15 and a second electrode tab 16 led out from the main body portion 14. The main body portion 14 includes a positive electrode coated area, a positive electrode active substance layer, a negative electrode coated area, a negative electrode active substance layer, and an isolation member 13. One of the first electrode tab 15 and the second electrode tab 16 is the positive electrode tab, and the other is the negative electrode tab.

In the present application, in the fully charged state, the dimension of the main body portion 14 along the first direction X is D4.

In some embodiments, the shell 20 includes a shell body 21 and an end cover 22. The shell body 21 has an opening, and the end cover 22 fits on the opening. For example, the shell body 21 includes two first side walls 211.

The shell body 21 can be a structure with an opening on one side, and one end cover 22 is provided to fit on the opening of the shell body 21. Alternatively, the shell body 21 can be a structure with openings on two sides and two end covers 22 are provided to fit on the two openings of the shell body 21 respectively.

For example, the end cover 22 is connected to the shell body 21 by welding, bonding, snapping, or other means.

In some embodiments, the first side wall 211 is a flat plate structure.

In some embodiments, the shell body 21 is provided with an opening at one end along the second direction Y. Optionally, the first direction X is perpendicular to the second direction Y.

In some embodiments, the shell body 21 includes two second side walls 212, which are arranged opposite to each other in the third direction Z. Optionally, the third direction Z is perpendicular to the first direction X and the second direction Y.

The two first side walls 211 and the two second side walls 212 are alternately arranged along the circumferential direction of the opening. The two ends of the first side wall 211 along the third direction Z are connected to the two second side walls 212 respectively.

In some embodiments, adjacent first side wall 211 and second side wall 212 are connected by an arc-shaped wall.

In some embodiments, the value of D1 can be measured using the following method: measuring the dimension D6 of the shell body 21 along the first direction X using a vernier caliper; measuring the wall thickness D7 of the first side wall 211 using a vernier caliper; D1=D6-2•D7.

During the cycling of the battery cell 7, the first side wall 211 may deform due to the expansion of the electrode assembly 10. Due to the small deformation at the end of the first side wall 211 near the second side wall 212, the end portions of the two first side walls 211 near the second side wall 212 can be clamped by the vernier caliper and the measured value is taken as D6.

In some embodiments, the battery cell 7 further includes two electrode terminals 40, which can be provided on the end cover 22. One electrode terminal 40 is configured for electrical connection with the first electrode plate 11 of the electrode assembly 10, and the other electrode terminal 40 is configured for electrical connection with the second electrode plate 12 to lead the electrical energy generated by the electrode assembly 10 out of the shell 20.

In some embodiments, the buffering member 30 may be a porous structure. The micropores in the buffering member 30 can be used to store the electrolytic solution. When the electrode assembly 10 expands and squeezes the buffering member 30, the electrolytic solution in the buffering member 30 can be squeezed out.

In some embodiments, the buffering member 30 may be made of foam.

In some embodiments, the first direction X is parallel to the thickness direction of the battery cell 7. In the battery, a plurality of battery cells 7 can be stacked along the first direction X.

In some embodiments, D2 and D3 satisfy: D3≤0.25•D2.

When the value of D2 is constant, the larger the value of D3, the larger the volume and the weight of the buffering member 30, and the lower the weight energy density of the battery cell 7. The inventors have found that when the value of D3 exceeds a certain range, the effect of the buffering member 30 on improving the cycling performance of the electrode assembly 10 will not further increase with the increase of D3. The inventors have conducted experiments and found that limiting the value of D3 to less than or equal to 0.25 • D2 can reduce the usage amount of the buffering member 30, increase the energy density of the battery cell 7, and improve the cycling performance of the electrode assembly 10.

In some embodiments, the buffering member 30 is a flat plate structure. The flat structure is easy to form and can improve the uniformity of force distribution on the electrode assembly 10 when the electrode assembly 10 expands.

In some embodiments, the buffering member 30 may be formed in the shape of a rectangle, circle, ellipse, or other shape. Optionally, the buffering member 30 is a rectangular flat plate.

In some embodiments, the buffering member 30 is attached to the electrode assembly 10.

Attachment refers to that the buffering member 30 is affixed and connected to the surface of electrode assembly 10. For example, the buffering member 30 can be bonded to the electrode assembly 10 through an adhesive.

The buffering member 30 attached to the electrode assembly 10 can be installed together with the electrode assembly 10 into the shell body 21 to simplify the assembly process. The electrode assembly 10 can further limit the shaking of the buffering member 30 when the battery cell 7 is subjected to external impact, in order to reduce the risk of the offset of the buffering member 30.

In some embodiments, the compression rate f of buffering member 30 under a pressure of 2Mpa satisfies: 1%≤f≤99%. Optionally, the compression rate f of the buffering member 30 under a pressure of 2Mpa satisfies: 40%≤f≤99%.

In some embodiments, the electrode assembly 10 includes a straight area 10a and two bent areas 10b. The two bent areas 10b are respectively located on two sides of the straight area 10a along the third direction Z perpendicular to the first direction X. The dimension of the buffering member 30 in the third direction Z is L1, the dimension of the electrode assembly 10 in the third direction Z in the fully charged state is L2, and the dimension of one electrode assembly 10 in the first direction X in the fully charged state is D4. L1, L2, and D4 meet: L1≥0.85(L2-D4).

The straight area 10a is an area of the electrode assembly 10 having a flat structure, and the part of the electrode plate located in the straight area 10a is roughly in a straight state. The bent area 10b is an area of the electrode assembly 10 having a bent structure, and the part of the electrode plate located in the bent area 10b is generally in a bent state. For example, the part of the electrode plate located in the bent area 10b is roughly bent into a circular arc.

In the fully charged state, the dimension of the bent area 10b along the third direction Z is roughly equal to half of D4, and L2-D4 is roughly the dimension of the straight area 10a along the third direction Z.

Due to the large gap between the bent area 10b of the electrode assembly 10 and the first side wall 211, the expansion force generated by the bent area 10b is small. The gap between the straight area 10 of the electrode assembly 10 and the first side wall 211 is small, so the expansion force generated by the straight area 10 is large. The present embodiment limits the value of L1 to be greater than or equal to 0.85 (L2-D4), so that the expansion of more than 85% of the area in the third direction Z of the straight area 10a can be absorbed by the buffering member 30 to ensure the cyclic performance of the straight area 10a.

In some embodiments, in the third direction Z, the two ends of the buffering member 30 exceed the straight area 10a. The buffering member 30 can effectively absorb the expansion of the straight area 10a and improve the cycling performance of the straight area 10a.

In some embodiments, L1 and L2 satisfy: L1 ≤ 1.1 • L2. In the third direction Z, the portion of buffering member 30 that exceeds the electrode assembly 10 will not absorb the expansion of the electrode assembly 10, but will instead increase the volume and the weight of the buffering member 30. The present embodiment reduces the usage amount of the buffering member 30 and increases the energy density of the battery cell 7 by the value of L1 less than or equal to 1.1•L2.

In some embodiments, the area of the projection of the buffering member 30 along the first direction X on the inner surface of the first side wall 211 is S1, and the area of the inner surface of the first side wall 211 is S2. S1 and S2 satisfy: S1≤0.95•S2.

The inner surface of the first side wall 211 will compress the electrode assembly 10 when the electrode assembly 10 expands, in order to limit the expansion deformation of the electrode assembly 10. In addition to accommodating the electrode assembly 10, the shell 20 further needs to accommodate other functional members so a portion of the inner surface of the first side wall 211 will not compress the electrode assembly 10. The embodiments of the present application reduce the overall usage of the buffering member 30 by S1≤0.95•S2, thereby providing more space for other members inside the shell 20, and improving the energy density and the service life of the battery cell 7.

In some embodiments, the dimension of each buffering member 30 along the first direction X in an uncompressed state is D5, and D5 satisfies: 0.1mm≤D5≤ 10mm. Optionally, the value of D5 is 0.1mm, 0.5mm, 1mm, 2mm, 4mm, 5mm, 8mm, or 10mm.

If D5 is too small, in order to meet the requirements, it is necessary to provide more buffering members 30 inside the battery cell 7, resulting in a complex structure of the battery cell 7 and low assembly efficiency. Therefore, the embodiments of the present application limit the value of D5 to be greater than or equal to 0.1mm.

If D5 is too large, then the buffering member 30 has too large weight and occupies too much space, resulting in a low energy density of the battery cell 7. Therefore, the embodiments of the present application limit the value of D5 to be less than or equal to 10mm.

In some embodiments, D5 satisfies: 0.5mm≤D5≤4mm.

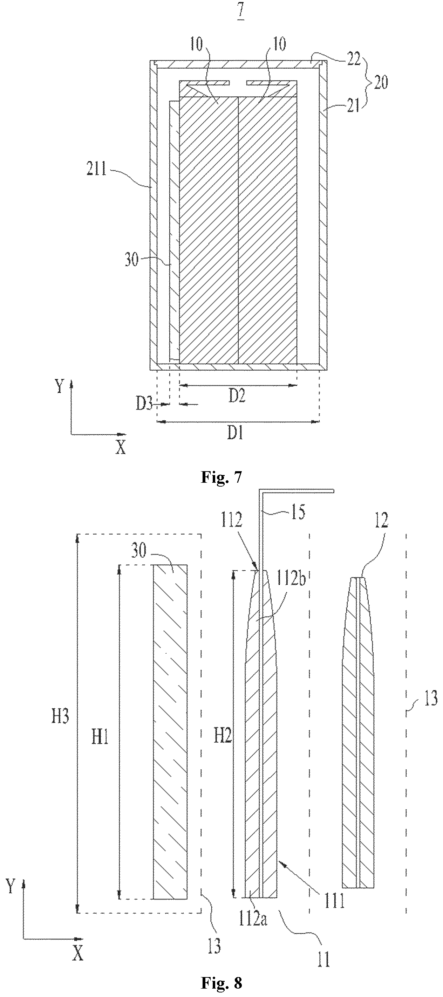

Fig. 7 is a sectional schematic diagram of a battery cell provided in some embodiments of the present application. Fig. 8 is a partial sectional diagram of an electrode assembly and a buffering member of a battery cell provided in some embodiments of the present application.

As shown in Figs. 7 and 8, in some embodiments, the electrode assembly 10 includes a first electrode plate 11. The first electrode plate 11 includes a first body 111 and a first electrode tab 15 led out from an end of the first body 111 along the second direction Y perpendicular to the first direction X. The dimension of the buffering member 30 along the second direction Y is H1. The first body 111 is provided with a first active substance layer 112, and the dimension of the first active substance layer 112 along the second direction Y is H2. H1 and H2 meet: H1 ≥0.85•H2.

The main reason for the expansion of the electrode assembly 10 is the expansion of the active substance layer during the charging. The embodiments of the present application limit the value of H1 to be greater than or equal to 0.85•H2, so that the expansion of the first active substance layer 112 in the second direction Y in more than 85% of the area can be absorbed by the buffering member 30, in order to reduce the pressure on the first active substance layer 112 and improve the cycling performance of the electrode assembly 10.

The first electrode plate 11 can be a positive electrode plate or a negative electrode plate. For example, the first electrode plate 11 is the negative electrode plate, and the first active substance layer 112 is the negative electrode active substance layer. The first body 111 further includes a negative electrode coated area of the negative electrode current collector.

In some embodiments, the first active substance layer 112 includes a substrate area 112a and a thinning area 112b connected to the substrate area 112a, and a thickness of the thinning area 112b is smaller than that of the substrate area 112a. In the second direction Y, the thinning area 112b is located on the side of the substrate area 112a near the first electrode tab 15. In the second direction Y, two ends of the buffering member 30 extend beyond the substrate area 112a.

During the forming of the first electrode plate 11, it is necessary to roll the first active substance layer 112 to increase the compaction density of the first active substance layer 112. The embodiments of the present application reduce the thickness of the thinning area 112b to reduce stress concentration at the boundary between the first body 111 and the first electrode tab 15 during the rolling, thereby reducing the risk of cracking of the first electrode tab 15.

Compared to the thinning area 112b, the substrate area 112a, when expands, generates a greater expansion force. Therefore, in the embodiments of the present application, two ends of the buffering member 30 along the second direction Y extend beyond the substrate area 112a to effectively absorb the expansion of the substrate area 112a and improve the cycling performance of the electrode assembly 10.

In some embodiments, the electrode assembly 10 further includes an isolation member 13, which is stacked with the first body 111. The dimension of the isolation member 13 along the second direction Y is H3. H1 and H3 meet: H1≤1.1•H3.

The isolation member 13 is configured to insulate and isolate the first body 111 from the second electrode plate 12.

In the second direction Y, the portion of the buffering member 30 that exceeds the isolation member 13 will not absorb the expansion of the electrode assembly 10, but will instead increase the volume and the weight of the buffering member 30. The present embodiment reduces the usage amount of the buffering member 30 and increases the energy density of the battery cell 7 by the value of H1 less than or equal to 1.1•H3.

In some embodiments, in the second direction Y, two ends of the buffering member 30 do not exceed the isolation member 13 to reduce the usage amount of the buffering member 30, reduce the risk of interference between the buffering member 30 and other members, and improve the energy density of the battery cell 7.

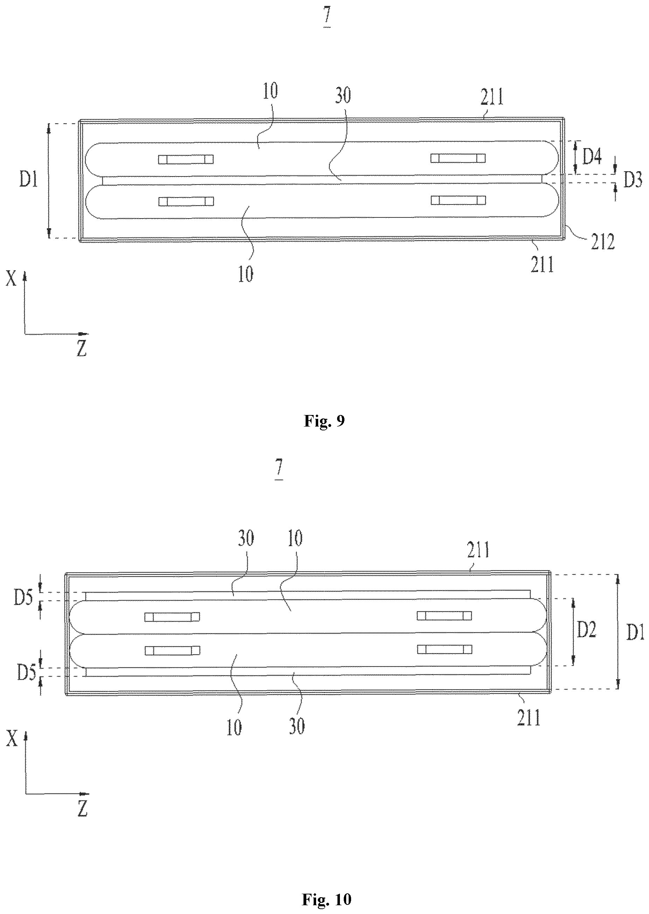

Fig. 9 is a structural schematic diagram of a battery cell provided in some other embodiments of the present application.

As shown in Fig. 9, in some embodiments, a plurality of electrode assemblies 10 are provided. The buffering member 30 is provided between at least two adjacent electrode assemblies 10.

The buffering member 30 provided between two adjacent electrode assemblies 10 can reduce the risk of the shaking of the buffering member 30 when the battery cell 7 is subjected to external impacts.

Fig. 10 is a structural schematic diagram of a battery cell provided in some further other embodiments of the present application. As shown in Fig. 10, in some embodiments, a plurality of electrode assemblies 10 and a plurality of buffering members 30 are provided.

For example, two electrode assemblies 10 and two buffering members 30 are provided. Two electrode assemblies 10 are arranged to be adjacent and form an electrode unit, and two buffering members 30 are located on two sides of the electrode unit along the first direction X respectively.

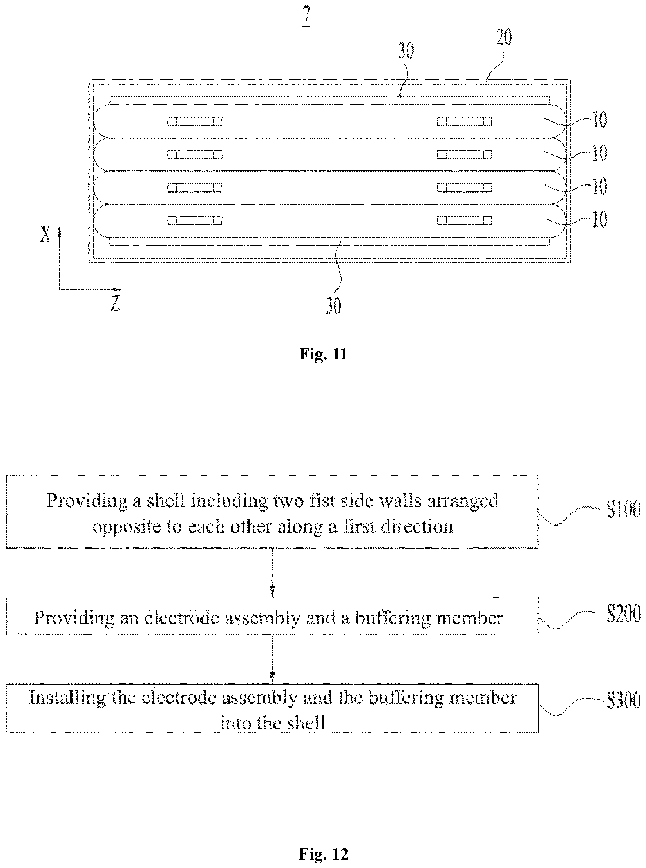

Fig. 11 is a structural schematic diagram of a battery cell provided in some still other embodiments of the present application. As shown in Fig. 11, in some embodiments, four electrode assemblies 10 and two buffering members 30 are provided. Four electrode assemblies 10 are arranged to be adjacent and form an electrode unit, and two buffering members 30 are located on two sides of the electrode unit along the first direction X respectively.

According to some embodiments of the present application, the present application further provides a battery including a plurality of battery cells provided in any of the aforementioned embodiments.

According to some embodiments of the present application, the present application further provides an electrical device including a battery cell provided in any of the above embodiments for providing electrical energy to the electrical device.

According to some embodiments of the present application, referring to Fig. 10, the battery cell 7 of the embodiments of the present application includes a shell 20, two electrode assemblies 10, and two buffering members 30. The shell 20 includes two first side walls 211 arranged opposite to each other along the first direction X, with a spacing of D1 between the two first side walls 211 along the first direction X. The two electrode assemblies 10 are accommodated inside the shell 20. In a fully charged state, the sum of the dimensions of the two electrode assemblies 10 along the first direction X is D2. The two electrode assemblies 10 form the electrode unit, and the two buffering members 30 are located on two sides of the electrode unit along the first direction X respectively. The buffering member 30 is configured to be compressible, and the dimensions of each buffering member 30 along the first direction X in an uncompressed state are D5. The sum of the dimensions of the two buffering member 30 along the first direction X in an uncompressed state is D3. D1, D2, and D3 meet: 0.9≤(D2+D3)/D1≤1.5.

Fig. 12 is a flowchart illustrating the method for manufacturing a battery cell provided in some embodiments of the present application.

As shown in Fig. 12, the embodiments of the present application provide a method for manufacturing a battery cell, including:

S100, providing a shell including two first side walls arranged opposite to each other in a first direction;

S200, providing an electrode assembly and a buffering member;

S300, installing the electrode assembly and the buffering member into the shell.

The spacing between the two first side walls along the first direction is D1. M electrode assemblies are provided, where M is a positive integer greater than 0. In the fully charged state, the sum of the dimensions of M electrode assemblies along the first direction is D2. N buffering members are provided, wherein N is a positive integer greater than 0. N buffering members and M electrode assemblies are stacked in the first direction. The buffering member is configured to be compressible, and the sum of the dimensions of N buffering members along the first direction in an uncompressed state is D3. D1, D2, and D3 meet: 0.9 ≤(D2+D3)/D1≤1.5.

It should be noted that the relevant structure of the battery cell manufactured by the method for manufacturing the battery cell mentioned above can be found in the battery cell provided in the above embodiments.

When the battery cell is manufactured based on the above-mentioned method for manufacturing the battery cell, it is not necessary to follow the above steps in sequence. That is to say, the steps can be executed in the order mentioned in the embodiments, or in a different order than mentioned in the embodiments, or all the steps are executed simultaneously. For example, the execution of steps S100 and S200 can be carried out simultaneously, regardless of their order.

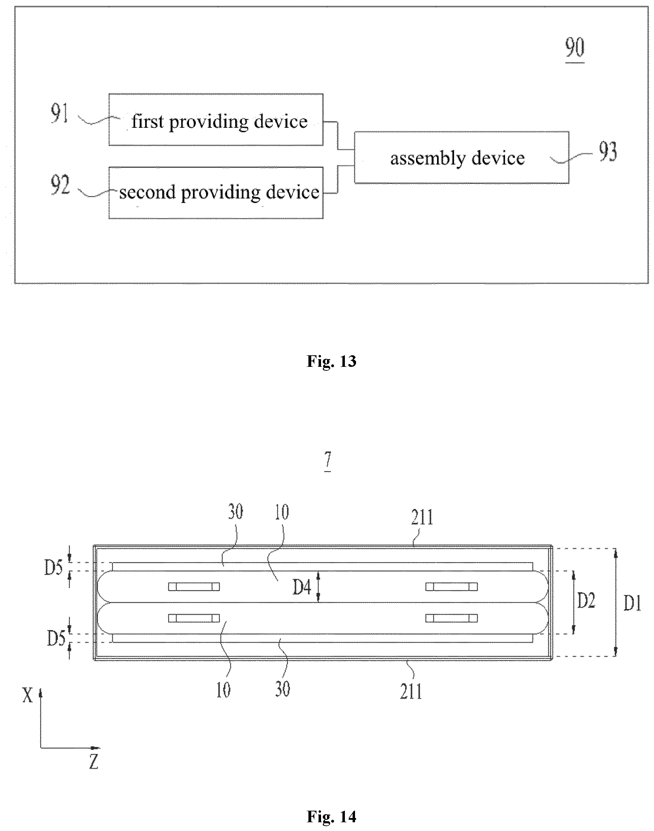

Fig. 13 is a schematic block diagram of a system for manufacturing a battery cell provided in some embodiments of the present application.

As shown in Fig. 13, the embodiments of the present application provide a system 90 for manufacturing a battery cell, which includes a first providing device 91, a second providing device 92, and an assembly device 93. The first providing device 91 is configured to provide a shell which includes two first side walls arranged opposite to each other in the first direction. The second providing device 92 is configured to provide an electrode assembly and a buffering member. The assembly device 93 is configured to install the electrode assembly and the buffering member into the shell. The spacing between the two first side walls along the first direction is D1. M electrode assemblies are provided, where M is a positive integer greater than 0. In the fully charged state, the sum of the dimensions of M electrode assemblies along the first direction is D2. N buffering members are provided, where N is a positive integer greater than 0. N buffering members and M electrode assemblies are stacked in the first direction. The buffering member is configured to be compressible, and the sum of the dimensions of N buffering members along the first direction in an uncompressed state is D3. D1, D2, and D3 meet: 0.9≤(D2+D3)/D1≤1.5.

The following further illustrates the present application in conjunction with embodiments.

In order to make the invention purpose, technical solution, and beneficial technical effects of the present application clearer, the following will further describe the present application in detail in conjunction with embodiments. However, it should be understood that the embodiments of the present application are only for the purpose of explaining the present application and not to limit it, and the embodiments of the present application are not limited to the embodiments provided in the specification. If specific experimental or operational conditions are not specified in the implementation example, they shall be made according to conventional conditions or conditions recommended by the material supplier.

Embodiment 1 can be prepared according to the following steps:
(i) A positive electrode slurry is obtained by mixing the positive electrode active substance NCM523, conductive agent acetylene black, and binder PVDF in a mass ratio of 96:2:2, adding solvent NMP, and stirring them under the action of a vacuum mixer until the system is uniform; a positive electrode plate is obtained by uniformly applying the positive electrode slurry on the aluminum foil, drying at room temperature, transferring to an oven for further drying, and then cold pressing, slitting, and cutting.
(ii) A negative electrode slurry is obtained by mixing a mixture obtained by the negative electrode active substance graphite or graphite and other active substances in different mass ratios, conductive agent acetylene black, thickener CMC, and binder SBR in a mass ratio of 96.4:1:1.2:1.4, adding deionized water as a solvent and stirring them under a vacuum mixer until the system is uniform; a negative electrode plate is obtained by uniformly applying the negative electrode slurry on the copper foil, drying at room temperature, transferring to an oven for further drying, and then cold pressing, cutting, and cutting.
(iii) An organic solvent is obtained by mixing ethylene carbonate (EC), methyl ethyl carbonate (EMC), and diethyl carbonate (DEC) in a volume ratio of 1:1:1. Then, an electrolytic solution with a concentration of 1mol/L is prepared by dissolving the fully dried lithium salt LiPF6 in the mixed organic solvent.
(iv) Polypropylene film having 12 um thickness is used as an isolation member.
(v) The positive electrode plate, the isolation member, and the negative electrode plate are stacked together and wound into a plurality of coils, then are flattened into a flat shape to prepare an electrode assembly.
(VI) Two electrode assemblies and two buffering members are stacked and installed inside the shell, and then the end cover and the shell are welded. The battery cell is obtained through the processes such as liquid injection, standing, formation, and shaping.

In step (VI), as shown in Fig. 14, two buffering members 30 and two electrode assemblies 10 are stacked along the first direction X, and the shell body 21 includes two first side walls 211 arranged opposite to each other along the first direction X. The spacing D1 between the two first side walls 211 in the first direction X is measured as 27mm using a vernier caliper. Before the buffering member 30 is installed into the shell body 21, the thickness D5 of the buffering member 30 is measured as 0.45mm using a vernier caliper. Correspondingly, the sum of the dimensions of two buffering members 30 in the first direction X in compressed state is D3, and D3 is 0.9mm.

Two battery cells 7 are prepared according to the above preparation steps, and interface detection and cycling performance testing are performed respectively.

### Interface detection:

A battery cell 7 is charged at a rate of 0.33C at room temperature until fully charged. After the battery cell 7 is fully charged, the battery cell 7 is disassembled and the dimensions of each electrode assembly 10 along the first direction X in the fully charged state are measured using a vernier caliper. After the measuring of the dimension is completed, the electrode assembly 10 is further disassembled and the interface state of the negative electrode plate is observed.

After measurement and calculation, the sum of the dimensions D2 of the two electrode assemblies 10 along the first direction X is 25.6mm.

### Cycling performance testing:

Another battery cell 7 is fixed on a fixture. The fixture clamps the two first side walls 211 of the battery cell 7 from two sides and applies a clamping force of 3000N to the first side wall 211. The fixture is provided with a pressure sensor to detect in real-time the pressure F between the first side wall 211 and the fixture.

At room temperature, the battery cell 7 is charged at a rate of 1C and discharged at a rate of 1C, and a full charge discharge cycle test is conducted until the capacity of the battery cell 7 decays to 90% of its initial capacity.

The status of the battery cell 7 is monitored in real-time during the cycle. When the capacity of the battery cell 7 decays to 90% of the initial capacity, the number of cycles of the battery cell 7 is recorded and the increase amount ΔF in expansion force of the battery cell 7 is calculated. Δ F=F-3000N.

For example, the fixture includes two clamping plates. The two clamping plates grip the battery cell 7 from two sides and are opposite to the two first side walls 211, respectively. A buffering pad can be provided between the clamping plate and the corresponding first side wall 211.

Embodiment 2: The preparation method and detection methods of the battery cell in Embodiment 2 are similar to Embodiment 1, with the difference that D3 is 1.4mm.

Embodiment 3: The preparation method and detection methods of the battery cell in Embodiment 3 are similar to Embodiment 1, with the difference that D3 is 4.1mm.

Embodiment 4: The preparation method and detection methods of the battery cell in Embodiment 4 are similar to Embodiment 1, with the difference that D3 is 8.15mm.

Embodiment 5: The preparation method and detection methods of the battery cell in Embodiment 5 are similar to Embodiment 1, with the difference that D3 is 12.2mm.

Embodiment 6: The preparation method and detection methods of the battery cell in Embodiment 6 are similar to Embodiment 1, with the difference that D3 is 14.9mm.

Embodiment 7: The preparation method and detection method of the battery cell in Embodiment 7 are similar to Embodiment 1, with the difference that D3 is 0.7mm and D2 is 23.6mm.

Embodiment 8: The preparation method and detection method of the battery cell in Embodiment 8 are similar to Embodiment 1, with the difference that D3 is 2.1mm and D2 is 23.6mm.

Comparative example 1: The preparation method and detection methods of the battery cell of the comparative example 1 are similar to Embodiment 1, with the difference that D2 is 24.3mm, and the buffering member is not provided inside in the comparative example 1 (i.e. D3 is 0).

Comparative example 2: The preparation method and detection methods of the battery cell of the comparative example 2 are similar to Embodiment 1, with the difference that D2 is 25.6mm, and the buffering member is not provided inside in the comparative example 2 (i.e. D3 is 0).

Comparative example 3: The preparation method and detection methods of the battery cell of the comparative example 3 are similar to Embodiment 1, with the difference that D2 is 26.4mm, and the buffering member is not provided inside in the comparative example 3 (i.e. D3 is 0).

Comparative example 4: The preparation method and detection methods of the battery cell of the comparative example 4 are similar to Embodiment 1, with the difference that D3 is 0.6mm and D2 is 21mm.

Comparative example 5: The preparation method and detection methods of the battery cell of the comparative example 5 are similar to Embodiment 1, with the difference that D3 is 17.6mm.

The evaluation results of Embodiments 1-8 and Comparative Examples 1-5 are shown in Table 1.

**Table 1**

| | D1 (mm) | D2 (mm) | D3 (mm) | (D2+D3) /D1 | number of cycle | expansion force Δ F(N) | interface state | whether to dive |
|---|---|---|---|---|---|---|---|---|
| Embodiment 1 | 27 | 25.6 | 0.9 | 0.98 | 1785 | 741 | slight wrinkles | No |
| Embodiment 2 | 27 | 25.6 | 1.4 | 1.00 | 2857 | 109 | no wrinkles | No |
| Embodiment 3 | 27 | 25.6 | 4.1 | 1.10 | 2541 | 401 | no wrinkles | No |
| Embodiment 4 | 27 | 25.6 | 8.15 | 1.25 | 2032 | 1059 | no wrinkles | No |
| Embodiment 5 | 27 | 25.6 | 12.2 | 1.40 | 1643 | 2111 | no wrinkles | No |
| Embodiment 6 | 27 | 25.6 | 14.9 | 1.50 | 1198 | 2707 | no wrinkles | No |
| Embodiment 7 | 27 | 23.6 | 0.7 | 0.90 | 1311 | 1002 | slight wrinkles | No |
| Embodiment 8 | 27 | 23.6 | 2.1 | 0.95 | 1502 | 844 | slight wrinkles | No |
| Comparative example 1 | 27 | 24.3 | 0 | 0.90 | 460 | 3213 | severe wrinkles | Yes |
| Comparative example 2 | 27 | 25.6 | 0 | 0.95 | 1015 | 2842 | severe wrinkles | No |
| Comparative example 3 | 27 | 26.4 | 0 | 0.98 | 893 | 3751 | severe wrinkles | No |
| Comparative example 4 | 27 | 21 | 0.6 | 0.80 | 531 | 2987 | severe wrinkles | Yes |
| Comparative example 5 | 27 | 25.6 | 17.6 | 1.60 | 977 | 3186 | no wrinkles | No |

It should be noted that along the axial direction of the winding of the electrode assembly, if the ratio of the dimension of the wrinkles to the dimension of the electrode plate is less than 5%, it is considered as no wrinkles. If the ratio of the dimension of the wrinkles to the dimension of the electrode plate is 5% - 30%, it is considered slight wrinkles. If the ratio of the dimension of the wrinkles to the dimension of the electrode plate is greater than 30%, it is considered severe wrinkles.

Referring to Embodiments 1-8 and Comparative examples 1-3, the embodiments of the present application can reduce the risk of wrinkling of the electrode plate during the initial charging of the battery cell, reduce the expansion force generated by the battery cell during the cycling, extend the number of cycles of the battery cell, and improve the cycling performance of the battery cell by providing the buffering member.

Referring to Embodiments 1-8 and Comparative examples 4-5, the embodiments of the present application limit the value of (D2+D3)/D1 between 0.9-1.5, which can reduce the risk of wrinkling of the electrode plate during the initial charging of the battery cell, reduce the expansion force generated by the battery cell during the cycling, extend the number of cycles of the battery cell, and improve the cycling performance of the battery cell.

Although the present application has been described with reference to preferred embodiments, various improvements can be made without departing from the scope of the present application and components can be replaced with equivalents. In particular, as long as there is no structural conflict, the various technical features mentioned in each embodiment can be combined in any way. The present application is not limited to specific embodiments disclosed herein, but includes all technical solutions falling within the scope of the claims.

## Claims

1. A battery cell, comprising:
a shell comprising two first side walls arranged opposite to each other in a first direction, with a spacing of D1 between the two first side walls along the first direction;
M electrode assemblies accommodated within the shell, wherein in a fully charged state, a sum of dimensions of M electrode assemblies along the first direction is D2, and the M is a positive integer greater than 0; and
N buffering members accommodated within the shell and stacked with the M electrode assemblies in the first direction, wherein the buffering member is configured to be compressible, and a sum of dimensions of N buffering members along the first direction in an uncompressed state is D3, where the N is a positive integer greater than 0;
wherein D1, D2, and D3 meet: 0.9≤(D2+D3)/D1≤1.5.

2. The battery cell according to claim 1, wherein D1, D2, and D3 meet: 0.98≤(D2+D3)/D1≤1.25.

3. The battery cell according to claim 1 or 2, wherein the first direction is parallel to a thickness direction of the battery cell.

4. The battery cell according to any one of claims 1-3, wherein D2 and D3 satisfy: D3 ≤0.25•D2.

5. The battery cell according to any one of claims 1-4, wherein the electrode assembly comprises a first electrode plate, and the first electrode plate comprises a first body and a first electrode tab led out from an end of the first body in a second direction perpendicular to the first direction;
a dimension of the buffering member along the second direction is H1, the first body is provided with a first active substance layer, and a dimension of the first active substance layer along the second direction is H2; and
H1 and H2 meet: H1≥0.85•H2.

6. The battery cell according to claim 5, wherein the first active substance layer comprises a substrate area and a thinning area connected to the substrate area, and a thickness of the thinning area is smaller than a thickness of the substrate area;
in the second direction, the thinning area is located on a side of the substrate area near the first electrode tab; and
in the second direction, two ends of the buffering member exceed the substrate area.

7. The battery cell according to claim 5 or 6, wherein the electrode assembly further comprises an isolation member which is arranged to be stacked with the first body;
a dimension of the isolation member along the second direction is H3; and
H1 and H3 meet: H1≤1.1•H3.

8. The battery cell according to claim 7, wherein in the second direction, two ends of the buffering member do not exceed the isolation member.

9. The battery cell according to any one of claims 1-8, wherein the electrode assembly comprises a straight area and two bent areas, the two bent areas are respectively located on two sides of the straight area along a third direction perpendicular to the first direction;
a dimension of the buffering member in the third direction is L1, a dimension of the electrode assembly in the third direction in a fully charged state is L2, and a dimension of one electrode assembly in the first direction in a fully charged state is D4; and
L1, L2, and D4 meet: L1≥0.85(L2-D4).

10. The battery cell according to claim 9, wherein in the third direction, the two ends of the buffering member exceed the straight area.

11. The battery cell according to claim 9 or 10, wherein L1 and L2 satisfy: L1≤1.1•L2.

12. The battery cell according to any one of claims 1-11, wherein an area of a projection of the buffering member along the first direction on an inner surface of the first side wall is S1, and an area of the inner surface of the first side wall is S2, and
S1 and S2 satisfy: S1≤0.95•S2.

13. The battery cell according to any one of claims 1-12, wherein a dimension of each buffering member along the first direction in an uncompressed state is D5, and D5 satisfies: 0.1mm≤D5 ≤10mm.

14. The battery cell according to any one of claims 1-13, wherein a compression rate f of the buffering member under a pressure of 2Mpa satisfies: 1%≤f≤99%.

15. The battery cell according to any one of claims 1-14, wherein the buffering member is attached to the electrode assembly.

16. The battery cell according to any one of claims 1-15, wherein the battery cell comprises a plurality of electrode assemblies; and
the buffering member is provided between at least two adjacent electrode assemblies.

17. The battery cell according to any one of claims 1-16, wherein the buffering member is a flat plate structure.

18. A battery comprising a plurality of battery cells according to any one of claims 1-17.

19. An electrical device comprising a battery cell according to any one of claims 1-17 for providing electrical energy.
